# EUROPEAN PATENT APPLICATION

(11) **EP 2 947 638 A1**
(43) Date of publication of application: **25.11.2015**
(21) Application number: 15165539.6
(22) Date of filing: 28.04.2015
(51) Int. Cl.: G08G 5/00, G01C 23/00, G06K 9/00, G08G 5/04, G08G 5/06

(54) **AIRPORT SURFACE COLLISION ZONE DISPLAY FOR AN AIRCRAFT**

(30) Priority: 19.05.2014 US 201414281627
(71) Applicant: Honeywell International Inc., Morristown, NJ 07962-2245 (US)
(72) Inventor: Kirk, James C., Morristown, New Jersey 07962-2245 (US); Dusik, Matej, Morristown, New Jersey 07962-2245 (US); Pokorny, Ondrej, Morristown, New Jersey 07962-2245 (US); Lamkin, Andrew F., Morristown, New Jersey 07962-2245 (US)
(74) Representative: Houghton, Mark Phillip

(57) **Abstract**

A system is configured to generate and display information regarding a strike zone of an aircraft. In some examples, a system is configured to generate and display an image of an environment around an aircraft together with a graphical indication of a strike zone of the aircraft, where the indication is scaled to reflect the strike zone at a distance range of one or more detected objects.

## Description

### TECHNICAL FIELD

The disclosure relates to obstacle detection for an aircraft, e.g., during ground operations.

### BACKGROUND

During some ground operations of an aircraft, a flight crew maneuvers the aircraft to maintain separation between the aircraft and obstacles (e.g., other ground traffic, airport structures, or other objects). The obstacles may be detected by the flight crew based on visual surveillance of the ground areas by the flight crew, based on information from Air Traffic Control, or both.

### SUMMARY

The disclosure describes example systems configured to generate and display information regarding a strike zone of an aircraft and methods for generating and displaying information regarding the strike zone. Example systems described herein are configured to generate and display an image of an environment around an aircraft together with a graphical indication of a strike zone of the aircraft, where the indication is scaled to reflect the strike zone at a distance range of one or more detected objects. In some examples, a ground obstacle detection system is configured to detect an object, determine an object type of the detected object, determine a distance of the detected object relative to an aircraft based on a change in size in the detected object in images captured by a camera over time, and scale a strike zone indication based on the determined distance. In other examples, a ground obstacle detection system is configured to determine a distance of the detected object relative to an aircraft using another technique, such as stereovision (using two or more cameras), focal distance processing, or the like.

In one aspect, the disclosure is directed to a method that comprises detecting, by a processor, an object in an image captured by a camera on an aircraft, determining, by the processor, a distance range of the object relative to a portion of the aircraft, and generating, by the processor, a strike zone indication based on the determined distance range of the object, wherein the strike zone indication is scaled to indicate a strike zone of the aircraft at the distance range of the detected object.

In another aspect, the disclosure is directed to a system comprising a camera, and a processor configured to detect an object within an image captured by the camera, determine a distance range of the object relative to a portion of an aircraft, and generate a strike zone indication based on the determined distance range of the object, wherein the strike zone indication is scaled to indicate a strike zone of the aircraft at the distance range of the detected object.

In another aspect, the disclosure is directed to a computer-readable medium comprising instructions that, when executed by a processor, cause the processor to detect an object within an image captured by a camera, determine a distance range of the object relative to a portion of an aircraft, and generate a strike zone indication based on the determined distance range of the object, wherein the strike zone indication is scaled to indicate a strike zone of the aircraft at the distance range of the detected object

In another aspect, the disclosure is directed to a system comprising means for generating images, means for detecting an object within an image captured by the means for generating images, means for determining a distance range of the object relative to a portion of an aircraft, and means for generating a strike zone indication based on the determined distance range of the object, wherein the strike zone indication is scaled to indicate a strike zone of the aircraft at the distance range of the detected object

In another aspect, the disclosure is directed to an article of manufacture comprising a computer-readable storage medium. The computer-readable storage medium comprises computer-readable instructions for execution by a processor. The instructions cause the processor to perform any part of the techniques described herein. The instructions may be, for example, software instructions, such as those used to define a software or computer program. The computer-readable medium may be a computer-readable storage medium such as a storage device (e.g., a disk drive, or an optical drive), memory (e.g., a Flash memory, read only memory (ROM), or random access memory (RAM)) or any other type of volatile or non-volatile memory that stores instructions (e.g., in the form of a computer program or other executable) to cause a processor to perform the techniques described herein. The computer-readable medium is non-transitory in some examples.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example ground obstacle detection system of an aircraft.
FIG. 2A is a conceptual side view of an example aircraft that is located on a ground surface and illustrates an example field of view of a camera.
FIG. 2B is a conceptual top view of the aircraft shown in FIG. 2A and illustrates a horizontal strike zone of the aircraft.
FIG. 3 is a conceptual side view of an example aircraft and illustrates an example vertical strike zone of an aircraft that has been normalized over a distance range.
FIG. 4 is a flow diagram of an example technique for generating and displaying a strike zone indication that is scaled to reflect a strike zone at a range of a detected object.
FIG. 5 is a flow diagram of another example technique for generating and displaying a strike zone indication that is scaled to reflect a strike zone at a range of a detected object.
FIGS. 6A and 6B are example graphical user interfaces that display a static strike zone indication and an image captured by a camera onboard an aircraft.
FIGS. 7A and 7B are example graphical user interfaces that display strike zone indications that have been scaled to a distance range of a detected object.

### DETAILED DESCRIPTION

A ground obstacle detection system can be used during ground operations to help an aircraft flight crew stay apprised of obstacles with which the aircraft may collide during the ground operations (e.g., during taxiing). The obstacles can include, for example, another aircraft, a ground vehicle, an airport structure, or another object. In examples described herein, a ground obstacle detection system comprises one or more video cameras on or in an aircraft. For example, a plurality of cameras may be distributed around the aircraft (e.g., at the left and right wingtips). The one or more cameras are each configured to capture image of the environment proximate the aircraft. The ground obstacle detection system is configured to present the captured images to a user via a display, e.g., as a video stream. The user can be, for example, a pilot in the cockpit of the aircraft or ground control. The components of the ground obstacle detection system may be located on the aircraft, but alternatively, one of more of the components may also be located externally (e.g., in an air traffic control tower) that communicates with the aircraft.

While the camera images may be useful for providing situational awareness, the lack of depth perception inherent in a two-dimensional camera display may not reliably provide the user with clearance information. Not every object appearing in the images captured by the cameras may pose a potential collision hazard for the aircraft, and a user may have difficulty ascertaining which objects are potential collision hazards. For example, due to parallax, an object appearing in the video stream may appear to be in a strike zone of a wing of the aircraft, even though the height of the object is such that it is not in the strike zone. A strike zone can be, for example, a volume of space in which portions of an aircraft may enter during movement of the aircraft, and, therefore, the aircraft may collide with objects in the strike zone.

The ground obstacle detection systems described herein may be configured to generate and present, via a display device, a graphical indication of the strike zone (also referred to herein as a "strike zone indication") of the aircraft, which may help the user ascertain, by viewing the graphical indication of the strike zone, whether the wingtip or other structure of the aircraft will clear an object captured in the camera images. The ground obstacle detection systems may be configured to scale the strike zone indication to visually indicate the strike zone at the range of one or more detected objects to account. In this way, the ground obstacle detection systems are configured to generate a strike zone display that accounts for the distance between the detected object and the aircraft.

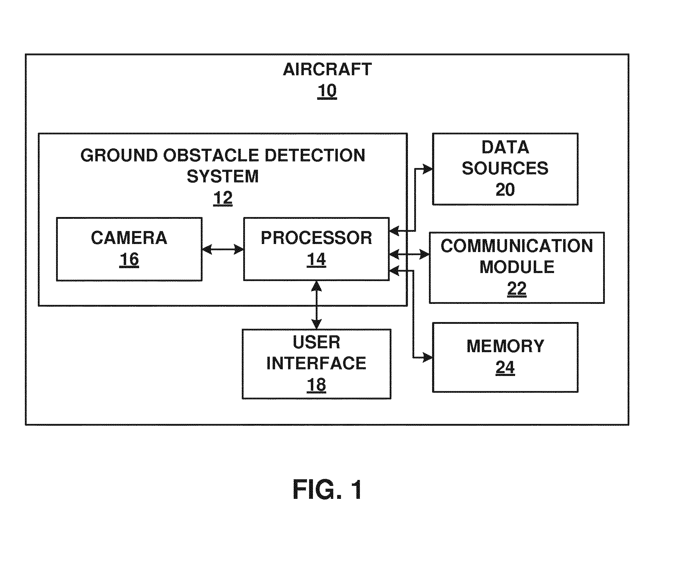

FIG. 1 is a block diagram illustrating an example aircraft 10, which includes ground obstacle detection system 12 configured to detect one or more objects proximate aircraft 10 and present information to a flight crew (e.g., a pilot) regarding the detected one or more obstacles and a strike zone of aircraft 10. The obstacle can be, for example, another aircraft, a ground vehicle, an airport structure, or another object with which aircraft 10 may collide with during a ground operation.

In the example shown in FIG. 1, ground obstacle detection system 12 includes processor 14 and cameras 16, and aircraft 10 further includes user interface 18, one or more data sources 20, communications module 22, and memory 24. The configuration of aircraft 10 and ground obstacle detection system 12 shown in FIG. 1 is merely one example. In other examples, aircraft 10 and ground obstacle detection system 12 can include different components. In addition, in some examples, ground obstacle detection system 12 and other aircraft systems may share resources. For example, in the example shown in FIG. 1, user interface 18, one or more data sources 20, communications module 22, and memory 24 are a part of ground obstacle detection system 12 and one or more other systems of aircraft 12.

Although system 12 is shown to be onboard aircraft 10, in other examples, a portion of system 12 or the entire system 12 can be located external to aircraft 10. For example, a processor may be located external to aircraft 10 and may perform any part of the functions attributed to processor 14 herein. Also, the camera may be located external to the aircraft, or one or more cameras may be located on the aircraft with one or more additional cameras located externally for multi-perspective imaging, which may further improve the ability to accurately detect the size and shape of obstacles.

Processor 14, as well as other processors disclosed herein, may comprise any suitable arrangement of hardware, software, firmware, or any combination thereof, to perform the techniques attributed to processor 14 herein. For example, processor 14 may include any one or more microprocessors, digital signal processors (DSPs), application specific integrated circuits (ASICs), field programmable gate arrays (FPGAs), or any other equivalent integrated or discrete logic circuitry, as well as any combinations of such components. Memory 24 includes any volatile or non-volatile media, such as a random access memory (RAM), read only memory (ROM), non-volatile RAM (NVRAM), electrically erasable programmable ROM (EEPROM), flash memory, and the like. Memory 24 may store computer readable instructions that, when executed by processor 14, cause processor 14 to perform the techniques attributed to processor 14 herein.

User interface 18 is configured to present information regarding one or more detected objects and one or more strike zone indications to a user, who may be a pilot of aircraft 10, another flight crew member, or may be located remotely from aircraft 10, such as at a ground control station. User interface 18 includes a display device, which can be, for example, one or more of a liquid crystal display (LCD) or a light emitting diode (LED) display configured to present visual information to the user. The display device can be provided by any suitable device, such as, for example, one or more of a computing device (such as a laptop computer, tablet computer or smartphone), an electronic flight bag (EFB), a primary flight display (PFD), a multifunction display (MFD), a navigation display, or any other suitable device that includes a display. The display can be a head-up display, a head-down display, a head-mounted display or any other display capable of presenting graphical information to a user.

In addition, in some examples, user interface 18 may include a speaker configured to deliver audible information, a sensory device configured to deliver information via a somatosensory alert, or any combination thereof. User interface 18 is configured to receive input from a user. For example, user interface 18 may include one or more of a keypad, buttons, a peripheral pointing device or another input mechanism that allows the user to provide input. The buttons may be dedicated to performing a certain function, e.g., receiving user input indicative of a specific type of input, or the buttons and the keypad may be soft keys that change in function depending upon the section of a display currently viewed by the user. In some examples, the display device of user interface 18 may be a touch screen display configured to receive the input from a user.

Processor 14 is configured to send and receive information over a data channel via communications module 22, which may include a transponder, a transmitter, or any combination thereof. For example, processor 14 may be configured to send, receive, or both send and receive data from data sources external to aircraft 10, such as from other vehicles and ground-based systems. The data received by processor 14 can include, for example, information indicative of objects proximate aircraft 10. Examples of data that can be received from sources external to aircraft 10 include, but are not limited to, data indicating the position and, in some cases, the velocity, of other aircraft on the ground, such as automatic dependent surveillance-broadcast or broadcast/traffic information service-broadcast (ADS-B/TIS-B) data received from other aircraft or ground vehicles, data transmitted by an airport or airline and indicating the position of other vehicles/aircraft/obstacles (e.g., received by aircraft 10 via a Worldwide Interoperability for Microwave Access (WiMAX)), or any combination thereof.

In the example shown in FIG. 1, ground obstacle detection system 12 includes a plurality of cameras 16. In other examples, system 12 may only include a single camera 16. Cameras 16 may be located at any suitable place on aircraft 10. For example, a first camera 16 can be located at a tip of a first wing of aircraft 10 (e.g., in a light module that includes wingtip lights) and a second camera 16 can be located at a tip of a second wing of aircraft 10. In addition, or instead, a camera 16 can be located on a nacelle of aircraft 10, on a tail of aircraft 10, or both. One or more cameras 16 could also be located external to the aircraft. The inclusion of multiple cameras may improve imaging by delivering multiple perspectives, which may further improve the ability to accurately detect the size and shape of obstacles.

Each camera 16 may be oriented relative to aircraft 10 such that any objects that may be a potential collision hazard (also referred to herein as a "threat") to the particular structure of aircraft 10 on which the camera is mounted falls within the field of view

(FOV) of the camera 16. In some examples, one or more cameras 16 are mounted at wingtips of aircraft 10 and are oriented such the cameras are aimed along an axis parallel (coaxial) to the fuselage of aircraft 10 (i.e., a longitudinal axis of the fuselage). Cameras 16 can have any sensor range suitable for providing the pilot with advanced notice of obstacles, e.g., with enough time to maneuver aircraft 10 on the ground to avoid the detected obstacles.

In addition, cameras 16 may have any suitable frame rate for detecting and tracking objects, such as about 5 frames per second to about 60 frames per second. In some examples, the frame rate is selected to provide processor 14 with framing updates adequate for relative motion assessment and to provide adequate response time to the pilot, e.g., to maneuver aircraft 10 to avoid a detected object.

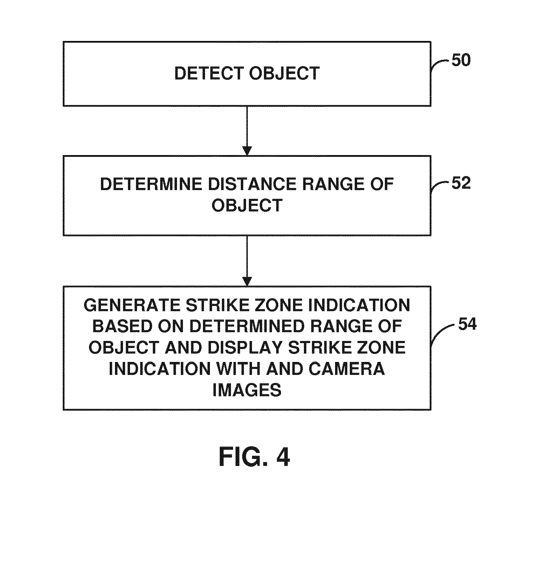

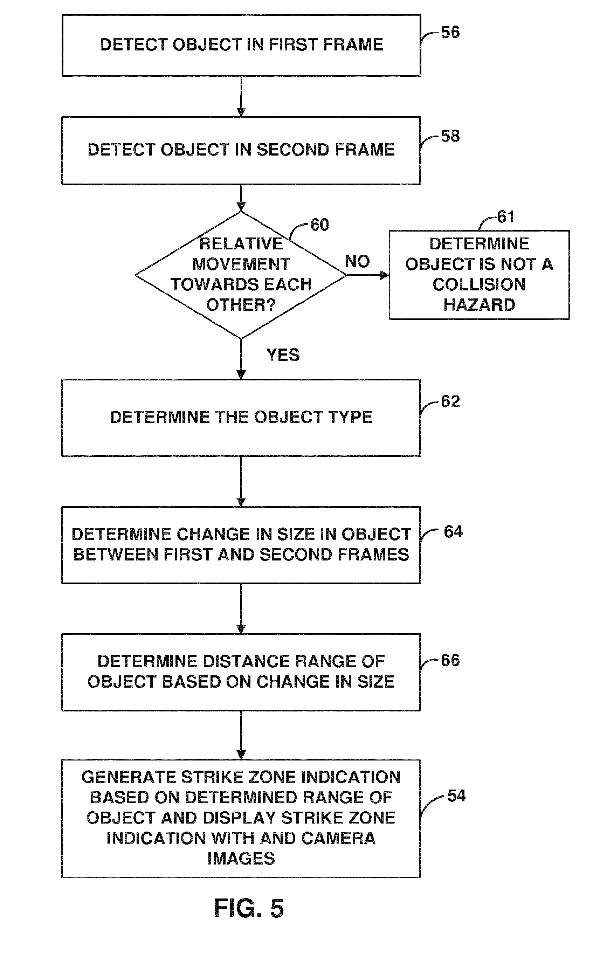

Processor 14 is configured to receive video data from cameras 16 and, in some cases, control cameras 16. The communicative coupling between processor 14 and cameras 16 may be, for example, a data bus, a direct connection, or any other wired or wireless communication interface. As discussed in further detail below with respect to FIG. 4, processor 14 is configured to detect an object, determine a distance range of the detected object to aircraft 10, and generate a strike zone indication based on the of the detected object to aircraft 10. For example, as discussed in further detail below with respect to FIG. 5, processor 14 may be configured to detect an object in an image captured by a camera 16, determine the object type, determine a proximity of the detected object to aircraft 10 based on a change in size in the detected obstacle in images captured by the camera over time, and generate a strike zone indication based on the proximity of the detected object to aircraft 10. Processor 14 may present the images captured by the camera together with the strike zone indication to a user via a display device of user interface 18.

Processor 14 is also configured to receive data from, and, in some cases, control, one or more data sources 20 onboard aircraft 10. The communicative coupling between processor 14 and one more data sources 20 may be, for example, a data bus, a direct connection, or any other wired or wireless communication interface. In some examples, one or more data sources 20 may be configured to generate data indicative of a location of aircraft 10. In these examples, one or more data sources 20 may include GPS, inertial navigation system (INS), or another positioning system configured to indicate the location of aircraft 10. The location of aircraft 10 indicated by the data from one or more data sources 20 may be the geographic location (e.g., latitude and longitude) of aircraft 10, the location of aircraft 10 relative to one or more landmarks, or any combination thereof. In addition, or instead, one or more data sources 20 may include a maps database, which stores a plurality of maps that indicate the location (e.g., by global coordinates) of ground structures, such as airport buildings, towers, airport signage and the like on the airport ground surface.

In some examples, processor 14 can be configured to determine the location of one or more objects known to not be collision hazards for aircraft 10 (e.g., based on the height of the objects) by referencing the present location of aircraft 10 (as indicated by one or more data sources 20) to a maps database. Processor 14 can then, for example, determine a detected object is not a threat to aircraft 10 in response to determining the detected object is one of the objects known to not be collision hazards for aircraft 10.

In some examples, processor 14 is configured to generate and deliver, via user interface 18, a notification to a user in response to detecting an object that is at least partially within a strike zone of aircraft 10. The notification may be an audible, visual, somatosensory, or any combination thereof.

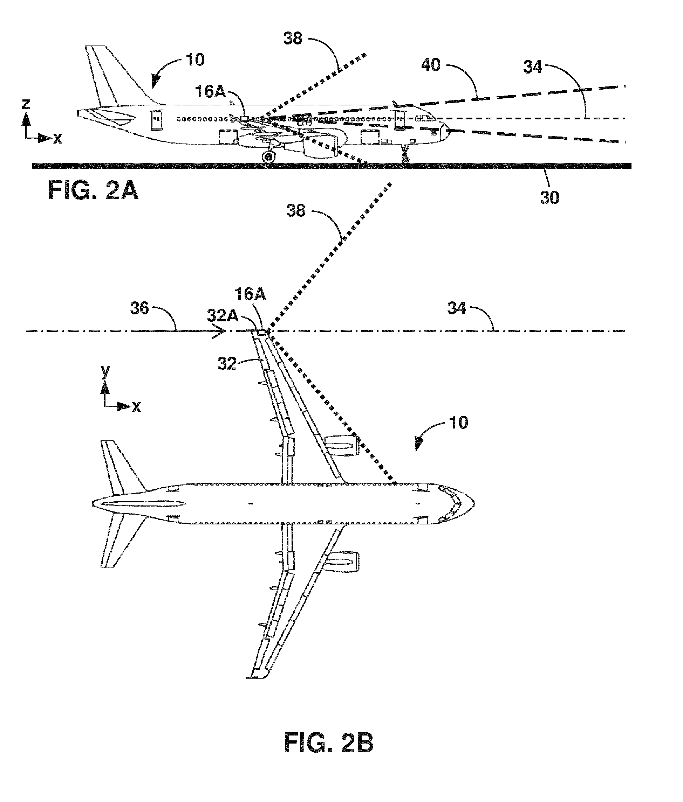

FIG. 2A is a conceptual side view of aircraft 10, which is located on a ground surface 30, and illustrates first camera 16A on a wingtip of aircraft 10. First camera 16A may be one of cameras 16 (FIG. 1) of ground obstacle detection system 12. FIG. 2B is a conceptual top view of aircraft 10. As shown in FIGS. 2A and 2B, camera 16A is mounted on a tip of wing 32 of aircraft 10 such that bore sight 34 of camera 16A is substantially aligned with the aircraft centerline in a vertical direction and is substantially aligned with the forward line of travel direction 36 of aircraft 10. In this way, images captured by camera 16A may be used to detect obstacles that may pose potential collision risks to aircraft 10 during forward travel of aircraft 10.

Camera 16A has a field of view (FOV) 38, which may be sized to capture a strike zone of wing 32, on which camera 16A is mounted. Not all objects falling within the FOV 38 of camera 16A may be a potential collision hazard for aircraft 12. Rather, an object may be considered a potential collision hazard if any part of the object sits within a strike zone of wing 32. For some aircrafts, the strike zone includes a horizontal strike zone and a vertical strike zone. The horizontal strike zone can be defined relative to wing 32. In particular, the space inside wingtip 32A (FIG. 2B) on the side of aircraft 10 is the horizontal strike zone and anything to the outside of wingtip 32A is considered a miss zone.

The vertical strike zone may also be defined relative to wing 32. For example, the vertical strike zone may be defined by a vertical band 40 (where the vertical direction is measured in the z-axis direction, orthogonal x-y-z axes are shown in FIGS. 2A and 2B for ease of description only) having a predetermined height that extends above and below wing 32. Vertical band 40 may be generally vertically centered relative to wing 32 in some examples. Anything outside vertical band 40 may be considered a miss zone.

In FIG. 2A, vertical band 40 is unmodified for distance relative to aircraft 10. Due to the spreading of FOV 38, the location of vertical band 40 in the images captured by camera 16A, as determined by processor 14 or a user viewing an image captured by camera 16A, spreads as the distance away from wing 32 (in the x-axis direction) increases. Due to this spread in vertical band 40, the vertical strike zone unmodified for distance may be overinclusive; objects relatively far from camera 16A may not actually fall within the vertical strike zone of aircraft 12 even though, when a user views an image captured by camera 16A, the object may appear to be within vertical strike zone 40.

In order to help prevent a user from inadvertently identifying all objects appearing to be within vertical band 40 as being in the vertical strike zone of wing 32, processor 14 is configured to generate and display a graphical indication of a strike zone together with the images captured by camera 16A, where the strike zone indication indicates the location of the strike zone of wing 32 (or other structure of aircraft 10, depending on where camera 16A is positioned) at the distance range of a detected object (relative to wing 32). For example, as described in further detail with respect to FIG. 5, processor 14 is configured to identify the type of object detected, determine the approximate range of the detected object to wing 32, generate a strike zone indication that is scaled to the approximate range, and display the strike zone indication together with the images captured by camera 16A. In this way, processor 14 may generate a graphical user interface from which a user may determine whether a detected object is a potential collision hazard for aircraft 10.

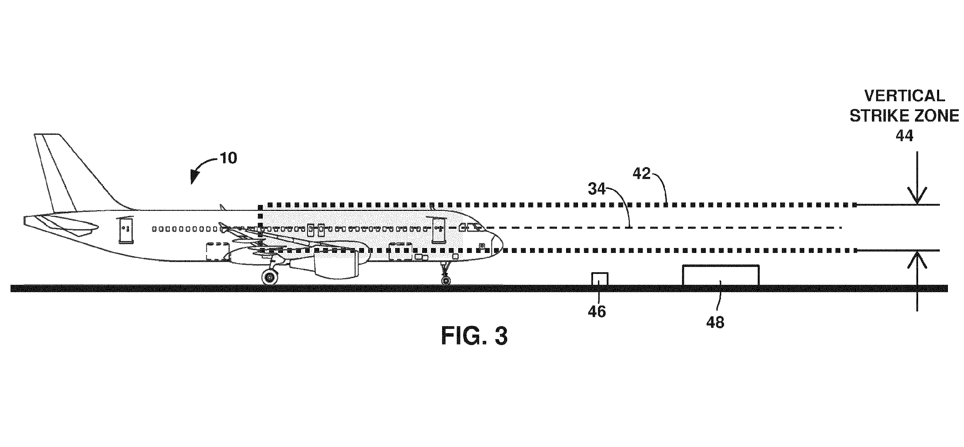

By scaling a strike zone to reflect the true height of the strike zone at the range of a detected object, processor 14 may effectively normalize a height of vertical band 40 over a distance range (relative to aircraft 10). FIG. 3 is a conceptual side view of aircraft 10 and illustrates vertical band 42, which represents vertical band 40 after processor 14 normalizes the height of vertical band 40 (FIG. 2A) over a distance range. As illustrated in FIG. 3, normalized vertical band 42 can be represented by a relatively unchanging height corridor. Normalized vertical band 42 defines vertical strike zone 44 that remains at the same height, regardless of the distance away from aircraft 10. In the example shown in FIG. 3, vertical band 42 defines the vertical strike zone associated with both wings and nacelles of aircraft 10. As shown in FIG. 3, with range discrimination, processor 14 can determine an object is inside a strike zone of aircraft 10 horizontally, and also inside the vertical strike zone 44 at all distances. If processor 14 is configured to generate a notification, e.g., to a pilot of aircraft 10, when an object that intrudes into the strike zone of aircraft 10 is detected, the range discrimination may result in fewer false alarms as compared to examples in which the strike zone is not normalized in height over distance range.

Processor 14 may be configured to identify certain objects (e.g., using image processing and/or object detection algorithms or techniques), and determine that the identified objects have a known height that falls outside of vertical strike zone 44 or otherwise in a miss zone of aircraft 10. Memory 24 (FIG. 1) of aircraft 10 or another memory can, for example, store a list of objects that are known to have a height that puts them below vertical strike zone 44 and associated features with which processor 14 may recognize the objects from an image captured by a camera 16. Example objects can include, for example, runway sign 46 and service truck 46 shown in FIG. 3, as well as other common runway structures or other airport structures.

FIG. 4 is a flow diagram of an example technique for generating and displaying a strike zone indication that is scaled to reflect a strike zone at a range of a detected object. While the technique shown in FIGS. 4 and 5, as well as many of the other techniques described herein, are primarily described as being performed by processor 14, in other examples, a processor of another device can perform any part of the techniques described herein, alone or in combination with processor 14 of ground obstacle detection system 12.

Processor 14 receives one or more images captured by one or more cameras 16 and detects an object in the one or more images (50). Processor 14 may, for example, extract foreground objects from a frame of video data, which may result in multiple object fragments, and then merge the object fragments into a common detected object based on, for example, the proximity of the fragments to each other. For example, processor 14 may be configured to merge object fragments directly adjacent to each other or within a threshold distance of each other and consider the object fragments to be a common object. Processor 14 may process the images captured by the one or more cameras 16 prior to detecting the object, e.g., by any combination of signal-to-noise enhancement, video denoising to remove noise from the video data generated by the one or more cameras 16, and other signal processing techniques.

In accordance with the technique shown in FIG. 4, processor 14 determines a distance range of the detected object (52). As discussed above, determining the distance range allows a strike zone indication to be normalized in height over a distance range, which may help processor 14 generate a strike zone indication display that is more meaningful and more accurately reflects the real world relationship between the vertical strike zone of aircraft 10 and a detected object.

Processor 14 may determine a distance range of the detected object using any suitable technique. For example, processor 14 may determine a distance range to a detected object using a stereo vision technique, in which cases two cameras 16 may be mounted side-by-side on wing 32 or another structure of aircraft 10 to generate the stereo images. In this example, the two cameras 16 may be mounted to capture the same region of interest from two different viewpoints points; the two images captured by the cameras at substantially the same time and from different viewpoints may be referred to as stereo images. Using the stereo images captured by the cameras, processor 14 can determine the location of a detected object, and, therefore, the approximate distance relative to aircraft 10, using triangulation. For example, based on known properties of the cameras (e.g., the tilt angle of the cameras, the height of the cameras above the ground, the distance between the camera boresights, and/or the optical properties of the cameras, such as the lens focal lengths), and the relative position of the detected objects in the stereo images, processor 14 can determine the displacement of one or more features of the object in the stereo images relative to the ground; the displacement can be inversely proportional to the differences in distance to the objects. As the distance from the cameras increases, the disparity decreases. Processor 14 can process the stereo images prior to determining the distance of the object, such as by removing distortions and performing image rectification.

As another example, processor 14 may determine a distance range to a detected object using focal distance processing. For example, processor 14 can determine the approximate distance of the object to aircraft 10 based on the focal length of the lens of a camera 16A, a known or estimated size of the object (e.g., determined using the object recognition techniques described with respect to FIG. 5). The ratio of the size of the object in an image captured by camera 16A (or another camera) to the true size of the object is equal to the ratio between the focal length of camera 16A and the distance to the object.

As another example, processor 14 may determine a distance of the detected object relative to an aircraft based on a change in size in the detected object in images captured by a camera over time, as described in further detail below with respect to FIG. 5.

Processor 14 generates a strike zone indication based on the determined distance to the object and displays (via a display device of user interface 18) the strike zone indication with images captured by one or more cameras 16 (e.g., a video stream) (54). Processor 14 may, for example, change of size of the displayed strike zone indication based on the distance to the object. In some examples, the further the object is from aircraft 10, the smaller the displayed strike zone indication. Processor 14 may overlay the strike zone indication on the image such that it outlines or otherwise indicates the objects in the image that fall within the strike zone.

Processor 14 may generate the strike zone indication using any suitable technique. For example, processor 14 may start off with a template strike zone indication that is generated based on stored dimensions of the vertical and horizontal strike zones of wing 32, and then adjust the bottom edge (the horizontal edge having the lowest height) of the template strike zone indication to indicate where, from the perspective of the particular camera 16 capturing the displayed image, the bottom edge of the vertical strike zone would be at the distance range of the detected object.

In some examples of the technique shown in FIG. 4, prior to determining the distance range of the object (52) or prior to generating a strike zone indication (54), processor 14 also determines whether the object and aircraft 10 are moving relative to each other, e.g., whether the detected object and aircraft 10 are moving towards each other, as described in further detail below with respect to FIG. 5. In response to determining the detected object and aircraft 10 are not moving towards each other, processor 14 may determine that the detected object does not pose a collision hazard and may generate and present, via the display device, an indication that the object shown in the video data does not pose a collision hazard to aircraft 10.

In response to identifying relative movement of the detected object and aircraft 10 towards each other, processor 14 may determine the distance range of the object (52) and generate a strike zone indication based on the determine distance range (54).

FIG. 5 is a flow diagram of another example technique for generating and displaying a strike zone indication that is scaled to reflect a strike zone at a range of a detected object. Processor 14 is configured to receive images captured by one or more cameras 16. For ease of description, the technique shown in FIG. 5 is described with respect to an example in which processor 14 receives images captured by camera 16A. Processor 14 may, however, implement the technique to detect an object and determine a distance range to the detected obstacle based on images captured by another camera 16 or based on images captured by a plurality of cameras.

In the technique shown in FIG. 5, processor 14 detects an object a first frame of video data captured by camera 16A (56), e.g., using the example technique for detecting an object described above with respect to FIG. 4. Processor 14 can also use other techniques. Processor 14 detects the object in a second frame (58), which can be, for example, a frame from a different point in time. The second frame can be the next frame after the first frame or more than one frame after the first frame. Processor 14 can, for example, determine the object is detected in the second frame in response to determining a threshold number of pixels corresponding to the detected object overlap with the first frame. The threshold number of pixels required to constitute an overlap may be stored by memory 24 of aircraft 10 or another memory.

In accordance with another example technique for detecting an object in the first and second frames, processor 14 aligns the first and second frames. For example, processor 14 may use an image optical flow method such as the Lucas-Kanade method. As another example, processor 14 could apply some minimization method over pixels differences between images. Once aligned, processor 14 may observe that the background, which is planar, fits much better between frames than objects. Due to a change in perspective of camera 16A, motion of the objects themselves, or both, objects may have larger disturbances (differences between frames). Processor 14 can locate these disturbances in the images and determine the magnitude of the disturbances. Regions of the frames having the largest magnitudes of disturbance (regions with largest optical flow) serve as seeds into a segmentation process.

Segmentation of image regions may help processor 14 identify the whole area of the detected object, e.g., a plane. If several seeds belong to same object, segmentation may be used to connect the seed points too, while still identifying and separating different objects. Objects of interest, such as cars or aircraft, may have similar texture across their areas, and, thus, it may be relatively easy for processor 14 to find a relative large portion of the area of these objects. When two objects appear to overlap in an image, processor 14 may separate the objects based on the different magnitudes of the seeds. Triangulation or other stereoscopic image processing techniques may also be used to segment objects, when stereoscopic cameras are used.

In the example shown in FIG. 5, processor 14 determines whether the detected object and aircraft 10 are moving towards each other, e.g., based on a relative change in position or size of the object between the first frame and the second frame (60). The relative movement towards each other may indicate that the detected object may create a potential collision condition for aircraft 10. In some examples, processor 14 determines whether the detected object and aircraft 10 are moving towards each other based on the change in size in the detected obstacle in the second frame relative to the first frame. If the size of the detected obstacle is smaller in the second frame relative to the first frame, then processor 14 may determine that the detected object and aircraft 10 are moving away from each other, i.e., not towards each other.

In response to determining the detected object and aircraft 10 are not moving towards each other ("NO" branch of block 60), processor 14 may determine that the detected object does not pose a collision hazard (61). Accordingly, if a display device of user interface 18 (FIG. 1) is presenting real-time or near real-time video data generated by camera 16A, processor 14 may generate and present, via the display device, an indication that the object shown in the video data does not pose a collision hazard to aircraft 10. For example, processor 14 may overlay a graphical indication over the image of the object being displayed or near the image of the object, where the graphical indication indicates the detected object does not pose a collision hazard. The graphical indication can be, for example, any combination of a particular symbol, color coding (e.g., green coloring over the image of the object), text, shading, and the like. In other examples, processor 14 may not control user interface 18 to present information regarding the detected object in response to determining the detected object is not a collision hazard. Rather, processor 14 may only alert the user if the detected object is a collision hazard.

In response to determining there is relative movement of the detected object and aircraft 10 towards each other ("YES" branch of block 60), processor 14 may determine the object type of the detected object (62), e.g., by recognizing the object as being a certain type of object. In other examples, processor 14 may determine the object type (62) prior to determining whether there is relative movement between the detected object and aircraft 10.

Processor 14 may implement any suitable object recognition technique to determine the object type. For example, processor 14 can determine the object is detected in the second frame using neural network processing. As another example, memory 24 may store a plurality of object templates, and processor 14 may implement a template matching technique to determine which template the object best matches. Processor 14 can implement any suitable template matching technique, such as an edge matching technique in which processor 14 finds the edges of the object in the first frame, second frame, or both, and compares the edges to the stored templates until a best fit is detected. As another example, memory 24 may store a plurality of objects and associated features, and processor 14 may implement a feature-matching technique. For example, processor 14 may compare features of the detected object image to stored features, and, in response to finding a substantial match (e.g., a match or a near match) between the image features and a set of stored features, processor 14 may determine the detected object is the object associated with the stored features. The features can be, for example, linear edges, corners, and the like.

Memory 24 may associate a particular object with a particular size (e.g., a height and width). Thus, by determining the object type, processor 14 may estimate the size of the object and determine whether its height presents a threat to particular structures of aircraft 10, such as the wingtip and/or nacelles.

Prior to or after determining the object type, processor 14 determines a change in size in the object between the first frame and the second frame (64). For example, processor 14 may determine a change in the height (measured in the z-axis direction, where orthogonal x-y-z directions are shown in FIG. 2A) and the width (measured in the y-axis direction) of the detected obstacle between frames. Processor 14 may measure the height and width based on, for example, the number of pixels of the image of the object captured by camera 16A. In addition, in some examples, the height may be the height at a horizontal center (i.e., the center as measured in the y-axis direction in FIG. 2B) of the object in the captured image or the height at the tallest portion of the object in the captured image, and the width may be the width at a vertical center of the object in the captured image (i.e., the center as measured in the z-axis direction in FIG. 2A) or the greatest width of the object in the captured image.

The change in size in the detected obstacle from the first frame to the second frame serves as a distance cue, particularly when combined with an estimated size of the object and a known velocity of aircraft 10. Accordingly, in the technique shown in FIG. 5, processor 14 determines a distance range of the object relative to aircraft 10 based on the estimated size of the detected object, the change in size of the detected object between the first frame and the second frame, and focal length of camera 16A (66). Processor 14 may then use one or more algorithms stored by memory 24 to estimate the distance between the detected object and aircraft 10, such as wing 32 of aircraft 10. For example, processor 14 may use any suitable computer vision technique, such a structure-from-motion algorithm. A structure-from-motion algorithm is a range imaging technique that estimates three dimensional structures from two dimensional images sequences. Processor 14, while implementing the structure-from-motion algorithm, may use Epipolar geometry to compensate the movement of single camera and collate the two images taken in the first and second frames. Processor 14 may then use known algorithms for stereovision in order to estimate the distance between the detected object and aircraft 10, such as wing 32 of aircraft 10.

For example, for objects that are on the ground, processor 14 may estimate the distance from aircraft 10 to the detected object based on the known properties of camera 16A (e.g., the image resolution, field of view, and its orientation and position relative to ground, such as the height of the camera with respect to the ground), and by transforming the features of the image to world transformation and knowledge of ground plane distance. In some examples, the ground plane distance can be determined by processor 14 using an artificial plane (e.g., in cases in which height data is not available), which may be determined based on the known distance of camera 16A height above ground. In other examples, processor 14 can determine the ground plane distance with the aid of a ground model that provides terrain data. The ground model can be, for example, a height map database, which provides a detailed terrain map of an airport (or other location) at which aircraft 10 is located. Processor 14 can also be configured to determine, based on both the terrain data from the ground model and camera based size measurements of a detected object, whether the detected object is static or dynamic, which may indicate the threat level of the detected object.

Processor 14 may determine an object is on the ground with any suitable technique, such as object tracking or contour detection in time (between frames); for objects lying on ground there should be no counters. For objects that are not on the ground, processor 14 may solve a problem of mutual position of the object and its ground position (e.g., the vertical projection of the object). Processor 14 can identify portions of the object in an image, group portions that belong to a common object (e.g., based on relative distance of the portions), and solve a mutual position of ground and object, and, in some examples, mutual position of all objects with respect to each other. Processor 14 can, in some examples, detect the contour of the objects almost to the ground in order to determine the mutual position of the object and the ground. As another example, processor 14 may estimate the ground position of the object, and, therefore, the distance range from aircraft 10, based on a rate of area change of the object in time (not area itself) in the frames captured by camera 16A over time, provided that processor 14 knows or can reasonably estimate the speed of the object or actual or estimated size of object (e.g., based on object recognition). In some cases, processor 14 may estimate the speed of the object based on the context in which the object is detected, e.g., based on an expected speed of a taxiing aircraft if the object is detected on a taxiway at an airport.

In some examples, processor 14 may also use the change in size in the detected obstacle from the first frame to the second frame to estimate the speed of the obstacle relative to aircraft 12, e.g., based on the rate in change of the obstacle from the first frame to the second frame, and from the second frame to a third frame that is captured after the second frame.

In the technique shown in FIG. 5, processor 14 generates a strike zone indication based on the determined distance to the object and displays (via a display device of user interface 18) the strike zone indication with images captured by camera 16A (e.g., a video stream) (54). Processor 14 can generate the strike zone indication using any suitable technique, such as those described above with respect to FIG. 4. For example, processor 14 may, based on the identification of the object, determine that the object has a height that is not within the vertical strike zone of wing 32, such that the strike zone indication should be shaped to exclude the object from the strike zone indication displayed with the video data captured by camera 16A.

Other examples of the technique shown in FIG. 5 may not include determining whether there is relative movement between the object and aircraft (60).

In some examples of the technique shown in FIGS. 4 and 5, processor 14 determines the level of conflict a particular object poses, e.g., in examples in which there is conflicting information about whether the object is within a strike zone of aircraft 10, prior to generating the strike zone indication (54). For example, processor 14 may filter information indicating the relative conflict level (e.g., the possibility the object will collide with aircraft 10) of the object prior to generating the strike zone indication based on a confidence level in the information. As an example, processor 14 may apply a filter (e.g., a Kalman filter or the like) to apply a higher weight to a conflict determination made based on a determination, by processor 14, that the object appeared in a portion of the frames corresponding to the bore sight of the camera 16 with which the frames were captured, which may indicate that no matter how far away the detected object is, or what shape the object, a wing of aircraft 10 on which the camera 16 is mounted will collide with it. Processor 14 may apply a lower weight to a conflict determination made, by processor 14, based on the object recognition. Thus, if processor 14 misidentifies an object as a relatively small vehicle that has a height outside the vertical strike zone of aircraft 10, but processor 14 also determines that the object appears portion of the frames corresponding to the bore sight of the camera 16, processor 14 may thus generate a strike zone indication to include the object.

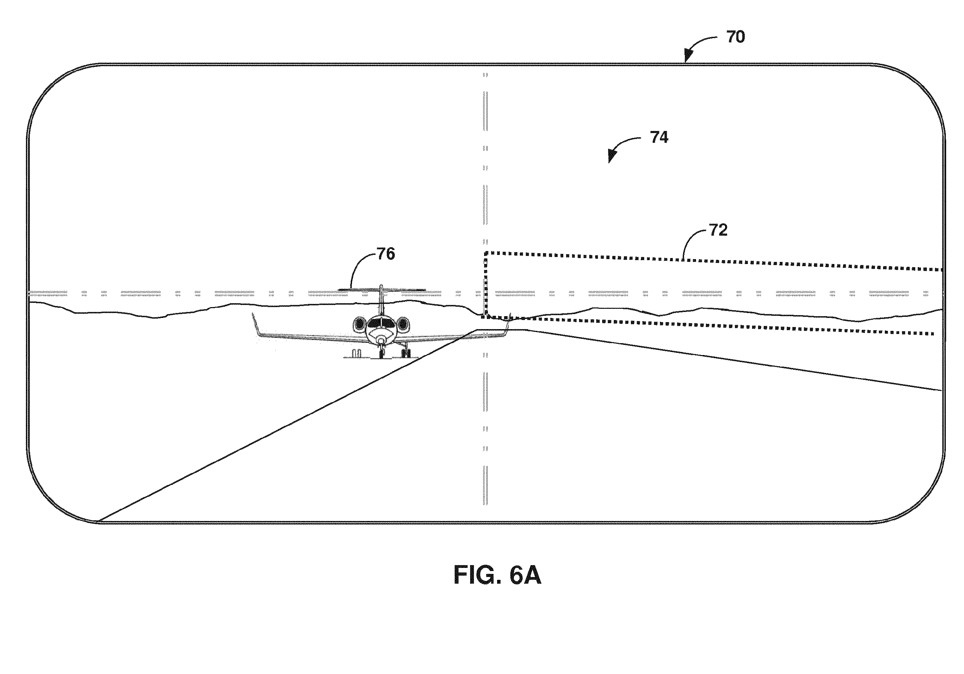

FIG. 6A is an example graphical user interface (GUI) 70 that may be generated by processor 14 and presented to a user via a display device of user interface 18. GUI 70 includes strike zone indication 72 together with image 74 captured by camera 16A. Image 74 may be one frame of video data captured by camera 16A. Image 74 includes an image of a detected object 76. Processor 14 may stream the images captured by camera 16A via GUI 70. Strike zone indication 72 is overlaid on image 74 such that it represents the location of wing 32 (FIGS. 2A and 2B) relative to the environment captured by image 74.

In the example shown in FIG. 6A, strike zone indication 72 is a fixed size and processor 14 does not adjust indication 72 to account for the range of a detected object to aircraft 10. As shown in FIG. 6A, when object 76 (which is a small aircraft in FIG. 6A) is relatively far from aircraft 10, object 76, and, in particular, a vertical stabilizer, appears to be within a strike zone of aircraft 10. This may be attributable to parallax.

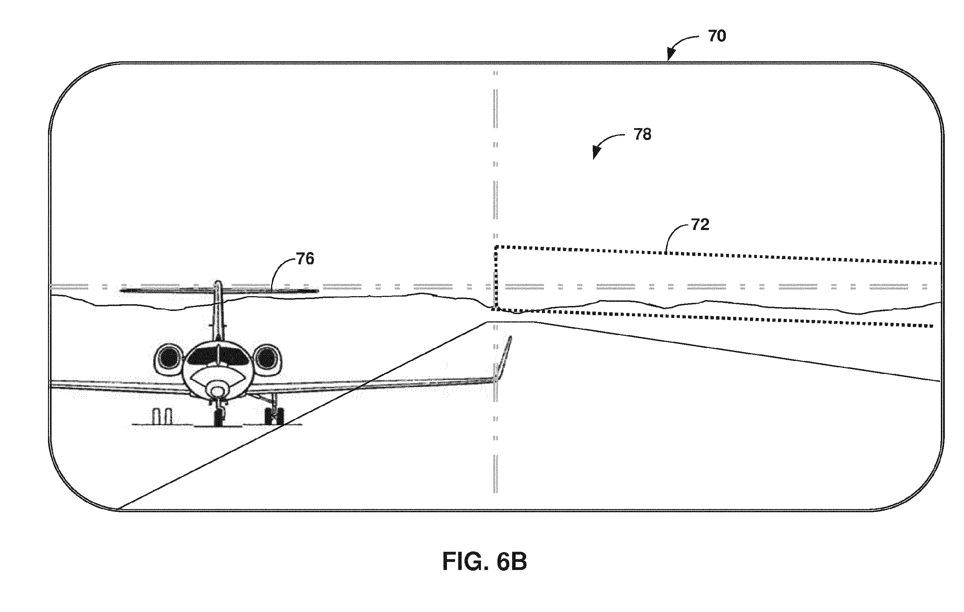

As shown in FIG. 6B, once object 76 is closer to aircraft 10, it becomes apparent from a subsequent image 78 captured by camera 16 that object 76 is not in strike zone 72. In image 78, the detected object 76 is larger (relative to image 74) because of the closer proximity of object 76 to wing 32. However, object 76 has dropped down to be outside of strike zone 72 due to parallax.

In examples in which processor 14 does not scale a strike zone to reflect the strike zone at the distance range of a detected strike zone, processor 14 may inadvertently generate a notification that an object violating the strike zone of aircraft 10 has been detected. This may cause the pilot of aircraft 10 (or other user) to check the video stream to determine whether the detected object is, in fact, a potential collision risk for aircraft 10. In this way, the failure of scale the strike zone for distance range of a detected object may result in false positive notifications of hazard detections.

In some examples, processor 14 may determine the type of object 76 detected, determine the height of the detected object 76, and determine that the object 76 is not a potential collision risk for aircraft 10 in response to determining the height of detected object 76 is lower than the vertical strike zone of aircraft 10. In these examples, processor 14 may not generate a notification in response to determining the identified type of object 76 indicates object 76 is not a threat to aircraft 10. However, when a pilot is viewing image 74 generated by camera 16A, the pilot may not be aware of the true height of the detected object 76, and, therefore, may not be able to immediately ascertain from image 74 and the outline of strike zone 72 that the detected object 76 is not a threat. As described below, the scaled strike zone indications described herein may help the pilot more quickly ascertain from an image that a detected object is not a threat. In addition, the scaled strike zone indications may help reduce the number of false positive notifications of hazard detections.

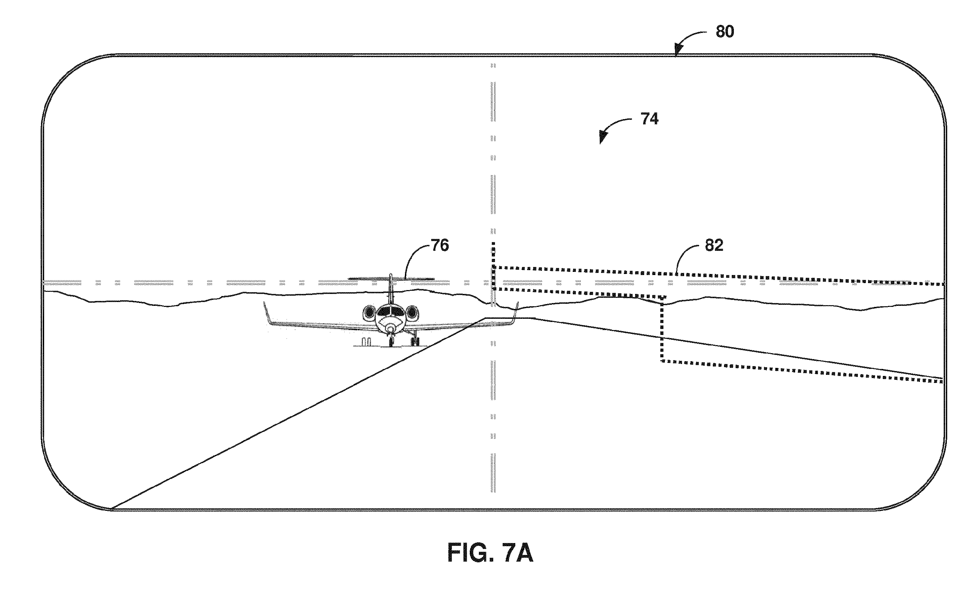

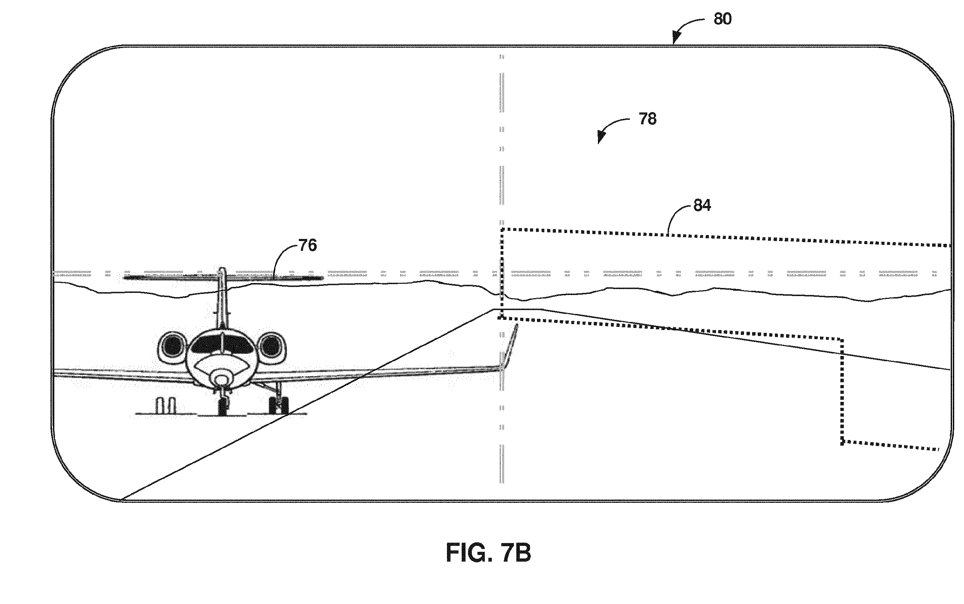

FIGS. 7A and 7B illustrate an example GUI 80 in which a strike zone indication is scaled (by processor 14) to a distance range of a detected object. Processor 14 may generate GUI 80, e.g., using the technique described with respect to FIG. 5, and display GUI 80 via a display device of user interface 18. As shown in FIG. 7A, GUI 80 includes strike zone indication 82 displayed in conjunction with image 74 captured by camera 16A. In contrast to strike zone indication 72 (FIGS. 6A and 6B), strike zone indication 82 is scaled to reflect the vertical strike zone at the distance range of detected object 76. If a captured image 74 includes more than one detected object, then processor 14 may generate strike zone indication 82 to outline a common strike zone envelope for all of the detected objects and the respective distance ranges. A user may relatively quickly ascertain from GUI 80 that object 76 is not in a strike zone of aircraft 10.

FIG. 7B illustrates example updated GUI 80 that now includes image 78 captured by camera 16A subsequent to capturing image 76, and an updated strike zone indication 84. As shown by images 74, 78 shown in FIGS. 7A and 7B, respectively, object 76 and aircraft 10 are moving relative to each other, such that a range of object 76 relative to aircraft 10 decreases over time. Processor 14 may update GUI 80 to include an updated strike zone indication 84 that is scaled to the most recently determined range of detected object 76 to aircraft 10. In this way, processor 14 may generate strike zone indications 82, 84 that are scaled to reflect the strike zone at the current distance range of detected object 76.

As shown in FIGS. 7A and 7B, scaling strike zone indications 82, 84 to reflect a strike zone at a particular distance range may allow for the refinement of a strike zone display for given objects, particularly when compared to a static strike zone indication 72 that remains unchanged, regardless of the distance of a detected object.

In examples in which processor 14 generates a notification in response to determining a detected object 76 is within a strike zone of aircraft 10, scaling strike zone indications to reflect the strike zone at the range of a detected object may permit processor 14 to issue notifications more reliably and may minimize or even eliminate the need for the pilot (or other user) to consult the video stream each time an object is determined to be within a horizontal strike zone of aircraft 10. Furthermore, when the pilot is viewing the video stream, the display of a scaled strike zone indication 82, 84 may allow the pilot to more quickly ascertain an object appearing in the frame of video data is not a hazard.

FIGS. 7A and 7B illustrate example GUIs that include strike zone indications for a wingtip of aircraft 10. In other examples, processor 14 can generate a GUI that includes strike zone indications for other structures of aircraft, such as a nacelle. For example, processor 14 can generate a GUI that includes an outline (or other strike zone indication) of an engine nacelle clearance at a given distance range.

In some examples, in addition to generating and displaying a strike zone indication together with images captured by one or more cameras 16, processor 14 can also include other reference information in the display of the video data. For example, system 12 can include one or more lasers configured to project a line to mark the outer travel limit of the wingtips of aircraft 10, and the line can be displayed with the video data, as described in U.S. Patent Application No. 13/742,688 by Kirk et al., which was filed on January 16, 2013 and is entitled, "SYSTEMS AND METHODS FOR AIRCRAFT WINGTIP PROTECTION." U.S. Patent Application No. 13/742,688 by Kirk et al. is incorporated herein by reference in its entirety. The laser can direct the laser beam in a direction approximately parallel to a longitudinal axis of the aircraft fuselage

As another example of reference information, processor 14 can include an "avoidance grid" overlaying the camera image, as also described in U.S. Patent Application No. 13/742,688 by Kirk et al. Processor 14 can generate the avoidance grid based on predetermined properties of the camera (i.e., height above the ground, and a lens focal length). Another example of reference information that processor 14 can include in the image is a horizon line determined according to a focal length of a lens on the camera 26 capturing the images and height of the camera 16 (i.e., lens) above the ground, as described in U.S. Patent Application No. 13/742,688 by Kirk et al..

Another example of reference information that processor 14 can include in the image is curved and/or straight distance lines, such as those described in U.S. Patent Application No. 13/742,688 by Kirk et al.. The lines may extend from a near part of the video (close to aircraft 10) and converge towards a horizon line. Example lines that processor 14 can generate and include in the image include any combination of: a line corresponding to an end of the wingtip (i.e., a wingtip travel line), a line corresponding to a nacelle travel line, a line corresponding to the boresight of the camera 16 capturing the image, a safety buffer line, which indicates a predetermined distance (e.g., about 3 meters) from the wingtip, outside the horizontal strike zone, and a line corresponding to a trajectory of aircraft components of interest (e.g., engine nacelle, camera, or a wingtip). Processor 14 can determine the trajectory of aircraft based on data from one or more data sources 20. Other than the line corresponding to the trajectory of aircraft components of interest, the lines may be parallel to a longitudinal axis of a fuselage of aircraft 10. In some examples, processor 14 may also include distance markers (in a direction away from aircraft 10) along the lines.

The techniques of this disclosure may be implemented in a wide variety of computer devices. Any components, modules or units have been described provided to emphasize functional aspects and does not necessarily require realization by different hardware units. The techniques described herein may also be implemented in hardware, software, firmware, or any combination thereof. Any features described as modules, units or components may be implemented together in an integrated logic device or separately as discrete but interoperable logic devices. In some cases, various features may be implemented as an integrated circuit device, such as an integrated circuit chip or chipset.

If implemented in software, the techniques may be realized at least in part by a computer-readable medium comprising instructions that, when executed in a processor, performs one or more of the methods described above. The computer-readable medium may comprise a tangible computer-readable storage medium and may form part of a larger product. The computer-readable storage medium may comprise random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The computer-readable storage medium may also comprise a non-volatile storage device, such as a hard-disk, magnetic tape, a compact disk (CD), digital versatile disk (DVD), Blu-ray disk, holographic data storage media, or other non-volatile storage device.

The term "processor," as used herein may refer to any of the foregoing structure or any other structure suitable for implementation of the techniques described herein. In addition, in some aspects, the functionality described herein may be provided within dedicated software modules or hardware modules configured for performing the techniques of this disclosure. Even if implemented in software, the techniques may use hardware such as a processor to execute the software, and a memory to store the software. In any such cases, the computers described herein may define a specific machine that is capable of executing the specific functions described herein. Also, the techniques could be fully implemented in one or more circuits or logic elements, which could also be considered a processor.

Various examples have been described. These and other examples are within the scope of the following claims.

## Claims

1. A method comprising:
detecting, by a processor, an object in an image captured by a camera on an aircraft;
determining, by the processor, a distance range of the object relative to a portion of the aircraft; and
generating, by the processor, a strike zone indication based on the determined distance range of the object, wherein the strike zone indication is scaled to indicate a strike zone of the aircraft at the distance range of the detected object.

2. The method of claim 1, determining the distance range of the object comprises one of:
determining the distance range using a stereo vision technique or a focal distance processing technique; or
receiving first and second frames of video data generated by the camera, wherein detecting the object in the image comprises detecting the object within the first frame and within the second frame, and determining, by the processor, an object type of the object, wherein determining the distance range comprises determining the distance range of the object relative to the portion of the aircraft based on a change in size of the object between the first and second frames and the object type.

3. The method of claim 1 or claim 2, further comprising:
generating, by the processor, a graphical user interface that comprises the strike zone indication overlaying one or more images captured by the camera; and
displaying, by a display device, the graphical user interface.

4. The method of any of claims 1 to 3, further comprising:
determining, by the processor, whether there is relative movement between the object and the aircraft towards each other based on a change in position or size of the object between the first and second frames;
determining the distance range in response to determining there is relative movement between the object and the aircraft towards each other; and
generating an indication that the object is not a hazard in response to determining there is not relative movement between the object and the aircraft towards each other.

5. The method of any of claims 1 to 4, wherein generating the strike zone indication comprises:
determining the object appears within a portion of image corresponding to a boresight of the camera;
determining an object type of the object;
determining the object type of the object indicates the object does not fall within the strike zone of the aircraft; and
generating the strike zone indication in response to determining the object appears within a portion of the image corresponding to the boresight of the camera and the object type of the object indicates the object does not fall within the strike zone of the aircraft.

6. A system comprising:
a camera; and
a processor configured to detect an object within an image captured by the camera, determine a distance range of the object relative to a portion of an aircraft, and generate a strike zone indication based on the determined distance range of the object, wherein the strike zone indication is scaled to indicate a strike zone of the aircraft at the distance range of the detected object.

7. The system of claim 6, wherein the processor is configured to determine the distance range of the object by one of:
using a stereo vision technique or a focal distance processing technique; or
detecting the object in the image by at least detecting the object within first and second frames of video data captured by the camera, determining an object type of the object, and determining the distance range of the object relative to the portion of the aircraft based on a change in size of the object between the first and second frames and the object type.

8. The system of claim 6 or claim 7, further comprising a display device, wherein the processor is configured to generate a graphical user interface that comprises the strike zone indication overlaying one or more images captured by the camera and display the graphical user interface via the display device.

9. The system of any of claims 6 to 8, wherein the processor is configured to determine whether there is relative movement between the object and the aircraft towards each other based on a change in position or size of the object between the first and second frames, determine the distance range in response to determining there is relative movement between the object and the aircraft towards each other, and generate an indication that the object is not a hazard in response to determining there is not relative movement between the object and the aircraft towards each other.

10. The system of any of claims 6 to 9, wherein the processor is configured to determine the object appears within a portion of the image corresponding to a boresight of the camera, determine object type of the object, determine the object type of the object indicates the object does not fall within the strike zone of the aircraft, and generate the strike zone indication in response to determining the object appears within a portion of the first frame and the second frame corresponding to a boresight of the camera and the object type of the object indicates the object does not fall within the strike zone of the aircraft.
